# FASCICULE DE BREVET EUROPEEN

(11) **EP 2 517 039 B1**
(45) Date de publication et mention de la délivrance du brevet: **04.05.2016**
(21) Numéro de dépôt: 10776695.8
(22) Date de dépôt: 12.11.2010
(51) Int. Cl.: G01S 3/784, F41G 3/14

(54) **DISPOSITIF DE DETECTION DE TACHE LASER A ECARTOMETRE MATRICIEL**
VORRICHTUNG ZUR ERKENNUNG VON LASERSPOTS MIT EINEM MATRIXDEVIOMETER
DEVICE FOR DETECTING LASER SPOT WITH MATRIX DEVIOMETER

(30) Priorité: 23.12.2009 FR 0906264
(43) Date de publication de la demande: 31.10.2012
(73) Titulaire: THALES, 92400 Courbevoie (FR)
(72) Inventeur: BELHAIRE, Eric, F-94230 Cachan (FR)
(74) Mandataire: Henriot, Marie-Pierre
(86) Numéro de dépôt international: PCT/EP2010/067344
(87) Numéro de publication internationale: WO 2011/076480

(56) Documents cités:
- EP-A1- 1 361 536
- EP-A1- 1 361 613
- EP-A1- 1 925 902
- US-A- 5 280 167
- US-B1- 7 397 019
- BEDABRATA PAIN ET AL: "A Review of Infrared Readout Electronics for Space Science Sensors", PROCEEDINGS OF THE INTERNATIONAL SOCIETY FOR OPTICAL ENGINEERING (SPIE), SPIE, USA, vol. 2020, 15 juin 1993 (1993-06-15), pages 1-47, XP002457338, ISSN: 0277-786X

## Description

La présente invention se situe dans le domaine des écartomètres utilisés pour la détection et la localisation de taches laser, et concerne plus précisément un détecteur de tache laser à écartomètre matriciel.

Ce type de dispositif est notamment utilisé dans les systèmes d'asservissement de lignes de visée, pour des armements guidés par laser ou des pods de désignation laser.

Les écartomètres, comme cela est connu, permettant d'assurer une double fonction : la détection d'une tache laser et le suivi de ladite tache. A cette fin, les écartomètres de l'état de la technique procèdent en deux phases :
- dans un premier temps, ils assurent la détection d'éclats laser, et l'identification du code d'émission de la tache laser associée, correspondant à une mesure des instants d'émission du laser à l'origine de la tache ;
- dans un second temps, ils assurent la mesure de la position de la tache laser sur un détecteur à quatre quadrants, au moyen d'un asservissement visant à centrer la tache laser sur ledit détecteur quatre quadrants.

Les principaux défauts de ces écartomètres connus sont les suivants :
- ils présentent un conflit entre la taille du champ observé et la sensibilité du dispositif : plus le champ observé augmente, plus le bruit est important et la sensibilité réduite ;
- la précision de mesure de la position d'une tache laser sur un détecteur quatre quadrants est aujourd'hui insuffisante au regard des besoins .

Pour améliorer significativement les performances de ces écartomètres, notamment en termes de précision et de sensibilité, il s'avère a priori nécessaire de mettre au point des technologies totalement matricielles.

Les principales solutions proposées sont décrites dans les brevets US 2003/0209650 et US 2003/0205663.

Dans le cas du brevet US 2003/0209650, il est divulgué une méthode consistant en la construction d'une petite matrice reconfigurable permettant de déplacer un détecteur quatre quadrants dans un champ de grande dimension. Une telle petite matrice de photodiodes reconfigurable permet une détection rapide de la position de la tache laser. Ce positionnement se fait par une réduction itérative du champ de vision afin de converger vers la position précise de la tache laser sur la matrice de photodiodes.

Dans le brevet US 2003/0205663, il est décrit un écartomètre comportant un circuit de lecture présentant une matrice de pixels « intelligents », en ce sens que lesdits pixels « intelligents » assurent eux-mêmes le rôle d'autant de détecteurs indépendants, disposant d'une électronique propre. Les pixels « intelligents » ont la capacité de mémoriser l'impulsion laser détectée. Ensuite, un « OU » global est appliqué à l'ensemble des pixels, permettant de déterminer précisément la position de la tache laser sur la matrice.

Les détecteurs de tache laser connus présentent différents inconvénients, en fonction de la technologie qu'ils mettent en oeuvre. Les détecteurs quatre quadrants, s'ils sont rapides et permettent de surveiller de façon continue, ont une sensibilité qui décroît rapidement avec la taille du champ observé. Les solutions matricielles présentent le défaut de nécessiter une électronique complexe, et donc coûteuse, en particulier pour ce qui concerne les pixels « intelligents ». De plus, de tels pixels « intelligents », du fait de leur complexité, présentent nécessairement des dimensions importantes, supérieures à 50 µm, induisant une précision de mesure limitée. En outre, l'électronique encombre les photodiodes et entraîne la perte de nombreux photons.

Enfin, les technologies connues d'écartomètre matricielle , telles que divulguées dans le brevet US 7,397,019, requièrent une lecture en continu de l'ensemble des pixels, pendant un temps d'intégration potentiellement long, afin de détecter l'arrivée d'une impulsion laser. De tels temps d'intégration longs entraînent du bruit important, et donc une sensibilité réduite du détecteur.

Un but de l'invention est notamment de pallier les inconvénients précités. Ainsi, le détecteur de tache laser à écartomètre matriciel selon la présente invention assure la détection de tache laser et la mesure précise de son positionnement sur une matrice de pixels, tout en présentant des performances améliorées en termes de rapport signal sur bruit, de taille du champ observé, et de faible coût.

Il est à noter par ailleurs que le détecteur de tache laser selon l'invention est notamment efficace pour des longueurs d'onde situées dans le proche infrarouge, contrairement aux dispositifs connus ayant recours à des technologies matricielles, mais mises en oeuvre exclusivement sur des substrats en silicium, présentant une efficacité quantique réduite, en particulier dans le proche infrarouge.

Dans ce but, l'invention a pour objet un dispositif de détection de tache laser à écartomètre selon la revendication 1.

Selon un premier mode de réalisation, le dispositif de détection d'impulsion laser est intégré au circuit de lecture.

Selon un deuxième mode de réalisation, le dispositif de détection d'impulsion laser est intégré au substrat unique.

Selon un troisième mode de réalisation, le dispositif de détection d'impulsion laser est indépendant du substrat unique et du circuit de lecture, et connecté électriquement audit substrat unique.

Avantageusement, le dispositif selon l'invention peut être configuré de telle sorte que :
- le substrat unique coopère avec le dispositif de détection d'impulsion laser pour détecter l'arrivée d'une impulsion laser correspondant à ladite tache laser, sur le circuit de lecture, l'ensemble de photodiodes étant à cette fin considéré comme une seule photodiode,
- la localisation de la tache laser sur la matrice de pixels, lue pendant un temps d'intégration adaptée, est assurée au moyen d'une technique de « pesée », consistant en une technique de calcul du barycentre de la tache laser, permettant de localiser ladite tache laser sur la matrice de pixels, avec une précision inférieure à la taille d'un pixel.

Avantageusement, le dispositif de détection d'impulsion laser mesure la fréquence de l'impulsion laser, correspondant à la tache laser, permettant de calculer un temps d'arrivée d'une impulsion laser ultérieure correspondant à la même tache laser.

Avantageusement, le temps d'intégration associée à la lecture de la matrice de pixels est sensiblement centré sur ledit temps d'arrivée de l'impulsion laser ultérieure.

Avantageusement, le dispositif selon l'invention peut comporter en outre un dispositif électronique de localisation rapide de tache laser complémentaire.

Dans une mise en oeuvre de l'invention, la matrice de photodiode peut être de type CMOS.

Avantageusement, lesdites billes sont constituées d'indium.

Avantageusement, ledit substrat unique est constitué de :
- silicium ; ou de :
- InGaAs.

Avantageusement, ledit substrat unique peut être dopé n.

Avantageusement, ledit substrat unique peut être dopé p.

D'autres caractéristiques et avantages de l'invention apparaîtront à l'aide de la description qui suit faite en regard des dessins annexés qui représentent :
- la figure 1 : un schéma général d'un détecteur de tache laser selon l'invention ;
- la figure 2 : un schéma présentant le fonctionnement des photodiodes aptes à détecter l'arrivée d'une impulsion laser ;
- la figure 3 : le schéma de principe d'un détecteur de tache laser à écartomètre matriciel, selon l'invention.

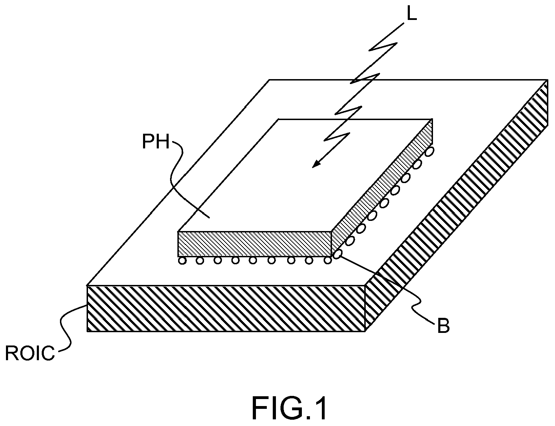

La figure 1 présente un schéma de la structure générale d'un détecteur de tache laser à écartomètre matricielle, selon l'invention. Une matrice de pixels, non visibles sur la figure 1, est agencée sur un substrat, formant un circuit de lecture ROIC, couramment désigné sous l'acronyme ROIC pour Read Out Integrated Circuit en anglais.

Une matrice de photodiodes PH est construite sur un substrat unique en matériau semi-conducteur adapté. Ce matériau semi-conducteur doit être photosensible à la longueur d'onde du laser que l'on cherche à détecter.

Comme exemple de matériau semi-conducteur, on pourra utiliser du silicium, en particulier dans le visible et dans le très proche infrarouge. Pour la détection de tache laser dans le proche infrarouge, par exemple en bande [0.9µm, 1.7µm], on pourra utiliser InGaAs.

De manière générale, la matrice de photodiodes PH peut être en tout matériau semi-conducteur adapté, c'est-à-dire ayant un bon rendement quantique pour la longueur d'onde observée.

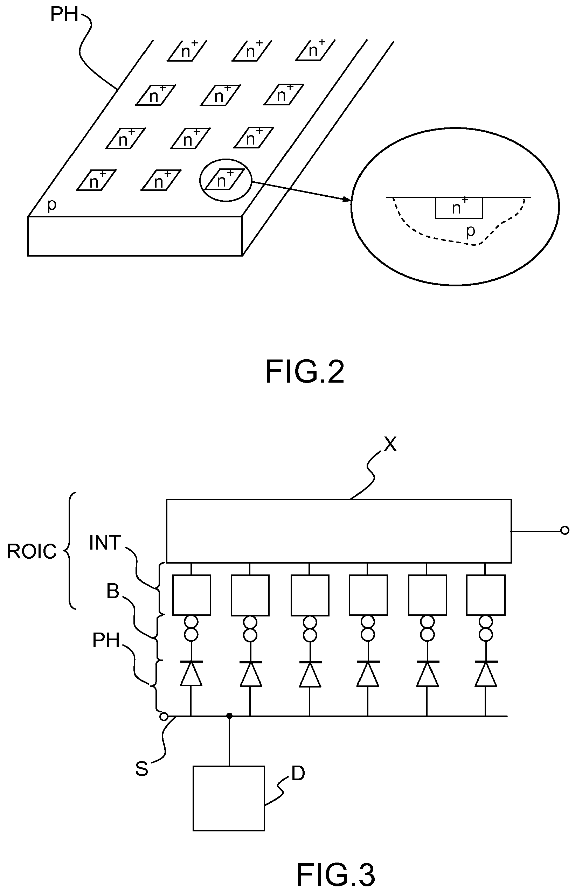

La matrice de photodiodes PH peut parfaitement être de type CMOS, mais elle ne l'est pas nécessairement. Configurée pour être assimilée à une seule photodiode de grande dimension, ladite matrice de photodiodes PH permet la détection rapide de l'arrivée d'une impulsion laser, représentée sous la forme de photons L venant frapper la couche photosensible constitutive du substrat unique sur lequel la matrice de photodiodes PH est agencée. Ladite détection est en fait actée par un dispositif électronique D adaptée, choisi dans l'état de la technique et représentée sur le schéma de la figure 3. Ce dispositif électronique d'impulsion D est connecté à l'électrode formée par le substrat unique. Il peut être intégré sur le circuit intégré ROIC ou être indépendant et relié électriquement audit substrat unique.

Les photodiodes PH sont reliées aux pixels du circuit de lecture ROIC par l'intermédiaire de billes en matériau souple et conducteur, par exemple en indium.

Lorsque des photons L frappent la couche photosensible supportant les photodiodes PH, la figure 2 montre que lesdites photodiodes sont aptes à convertir l'énergie des photons L en énergie électrique, suite à la formation de paires électron-trou, selon un phénomène physique bien connu. A titre d'exemple sur la figure 2, le substrat unique en matériau semi-conducteur photosensible est dopé p, la formation des photodiodes étant par conséquent complétée au niveau de petites zones n+ ; lorsqu'un photon arrive sur une telle photodiode, un courant électrique est transmis, par l'intermédiaire des billes B représentées sur la figure 1, au circuit de lecture ROIC, qui assure la fonction d'imageur.

La figure 3 illustre le fonctionnement d'un détecteur à écartomètre matricielle selon l'invention.

Comme on l'a vu, dans un premier temps, le dispositif électronique de détection d'impulsion D, connecté au substrat unique S, ou intégré au circuit ROIC, détecte l'arrivée d'une impulsion laser sur la matrice de photodiodes PH. A l'impulsion laser suivante reçue, les pixels INT du circuit de lecture ROIC sont lus pendant un temps d'intégration. Le circuit de lecture ROIC comprend également un multiplexeur X qui construit une image en fonction des informations lues sur les pixels INT.

Par une technique de pesée, connue, le détecteur à écartomètre matriciel va permettre de localiser avec précision la position de la tache laser par rapport à la matrice de photodiodes PH. Cette technique de pesée consiste à calculer la position du barycentre de la tache laser, en vue de localiser ladite tache laser sur la matrice de pixels, avec une précision sub-pixellique, c'est-à-dire inférieure à la taille d'un pixel.

Selon un mode de mise en oeuvre préféré de l'invention, le détecteur de tache laser selon l'invention comporte des moyens pour déterminer la fréquence de l'impulsion laser détectée.

Cette fonction est en général assurée par le dispositif électronique de détection d'impulsion D. L'intérêt de ce paramètre est double. Tout d'abord, cela permet d'identifier la phase de code du laser, afin de s'assurer que le laser détecté est bien celui que l'on cherchait à détecter.

L'autre intérêt, majeur, est de permettre de calculer le temps d'impulsion, et donc le temps d'arrivée de la prochaine impulsion laser correspondant au même laser. Par conséquent, il est possible de n'intégrer la lecture des pixels INT que pendant un temps d'intégration centré sur le temps d'arrivée d'une impulsion laser ultérieure correspondant au même laser. L'avantage est que cela permet de minimiser le bruit, et donc d'optimiser la sensibilité et lé précision du détecteur de tache laser selon l'invention.

Optionnellement, le dispositif de détection de tache laser à écartomètre matriciel peut comprendre un dispositif de désélection de pixels, en vue d'éliminer les photodiodes suspectées de dysfonctionnement, ou de s'affranchir d'une tache lumineuse parasite.

Cette fonction peut être réalisée au moyen de petits interrupteurs disposés au niveau de chaque photodiode ou de chaque pixel.

En résumé, l'invention a pour objet un dispositif de détection de tache laser à écartomètre matriciel, présentant pour principal avantage de combiner une grande vitesse de détection, grâce à une matrice de photodiodes pouvant être de grande taille, utilisée comme une seule photodiode à des fins de détection de la tache laser, et une grande précision de localisation de ladite tache laser sur la matrice de photodiodes, grâce à la connexion, par l'intermédiaire de billes, desdites photodiodes sur une matrice de pixels appartenant à un circuit de lecture, et à la mise en oeuvre d'une technique de pesée.

L'invention permet la détection rapide et la localisation sub-pixellique d'une tache laser, sans nécessiter de grande taille de pixels, ni d'électronique complexe.

## Revendications

1. Dispositif de détection de tache laser à écartomètre matriciel, comprenant :
• un circuit de lecture (ROIC) présentant une matrice de pixels (INT),
• une matrice de photodiodes (PH) réalisée sur un substrat unique (S), lesdites photodiodes (PH) comprenant chacune une électrode individuelle,
• un dispositif de détection d'impulsion laser (D),
**caractérisé en ce que** ladite matrice de photodiodes (PH) est hybridée sur ledit circuit de lecture (ROIC) par l'intermédiaire de billes (B) en matériau souple et conducteur, tel que de l'indium, mises au contact des pixels (INT) du circuit de lecture (ROIC), de sorte que ledit substrat unique (S) constitue une électrode commune à l'ensemble des photodiodes (PH) et que lesdites électrodes individuelles sont reliées auxdits pixels (INT) par lesdites billes (B), et **en ce que** le dispositif de détection d'impulsion laser (D) est connecté à l'électrode formée par le substrat unique (S), l'ensemble de photodiodes (PH) étant configurée pour être assimilée à une seule photodiode de grande dimension.

2. Dispositif selon la revendication 1, **caractérisé en ce que** le dispositif de détection d'impulsion laser (D) est intégré au circuit de lecture (ROIC).

3. Dispositif selon la revendication 1, **caractérisé en ce que** le dispositif de détection d'impulsion laser (D) est intégré au substrat unique (S).

4. Dispositif selon la revendication 1, **caractérisé en ce que** le dispositif de détection d'impulsion laser (D) est indépendant du substrat unique (S) et du circuit de lecture (ROIC), et connecté électriquement audit substrat unique (S).

5. Dispositif selon l'une des revendications précédentes, **caractérisé en ce qu'**il est configuré de telle sorte que la localisation de la tache laser sur la matrice de pixels (INT), lue pendant un temps d'intégration adapté, est assurée au moyen d'une technique de « pesée », consistant en une technique de calcul du barycentre de la tache laser.

6. Dispositif selon l'une des revendications précédentes, **caractérisé en ce que** le dispositif de détection d'impulsion laser (D) mesure la fréquence de l'impulsion laser (L), correspondant à la tache laser, permettant de calculer un temps d'arrivée d'une impulsion laser (L) ultérieure correspondant à la même tache laser.

7. Dispositif selon les revendications 5 et 6, **caractérisé en ce que** le temps d'intégration associé à la lecture de la matrice de pixels (INT) est sensiblement centré sur ledit temps d'arrivée de l'impulsion laser ultérieure.

8. Dispositif selon l'une quelconque des revendications précédentes, **caractérisé en ce qu'**il comporte en outre un dispositif électronique de localisation rapide de tache laser complémentaire.

9. Dispositif selon l'une quelconque des revendications précédentes, **caractérisé en ce que** la matrice de photodiode (PH) est de type CMOS.

10. Dispositif selon l'une quelconque des revendications précédentes, **caractérisé en ce que** lesdites billes (B) sont constituées d'indium.

11. Dispositif selon l'une quelconque des revendications précédentes, **caractérisé en ce que** ledit substrat unique (S) est constitué de :
• silicium ou de
• InGaAs.

12. Dispositif selon l'une quelconque des revendications 1 à 11, **caractérisé en ce que** ledit substrat unique (S) est dopé n.

13. Dispositif selon l'une quelconque des revendications 1 à 11, **caractérisé en ce que** ledit substrat unique (S) est dopé p.

## Patentansprüche

1. Vorrichtung zur Laserspoterkennung mit einem Matrixdeviometer, umfassend:
• einen Lesekreis (ROIC), der eine Matrix von Pixeln (INT) aufweist,
• eine Matrix von Photodioden (PH), die auf einem einzigen Substrat (S) realisiert ist, wobei die Photodioden (PH) jeweils eine individuelle Elektrode umfassen,
• eine Laserimpuls-Detektionsvorrichtung (D),
**dadurch gekennzeichnet, dass** die Matrix von Photodioden (PH) auf dem Lesekreis (ROIC) mit Hilfe von Kugeln (B) aus elastischem und leitendem Material wie Indium hybridisiert ist, die mit den Pixeln (INT) des Lesekreises (ROIC) in Kontakt gebracht werden, so dass das einzige Substrat (S) eine für alle Photodioden (PH) gemeinsame Elektrode darstellt und dass die individuellen Elektroden mit den Pixeln (INT) über die Kugeln (B) verbunden sind und dass die Laserimpuls-Detektionsvorrichtung (D) mit der Elektrode verbunden ist, die von dem einzigen Substrat (S) gebildet ist, wobei alle Photodioden (PH) konfiguriert sind, um zu einer einzigen großen Photodiode assimiliert zu werden.

2. Vorrichtung nach Anspruch 1, **dadurch gekennzeichnet, dass** die Laserimpuls-Detektionsvorrichtung (D) in den Lesekreis (ROIC) integriert ist.

3. Vorrichtung nach Anspruch 1, **dadurch gekennzeichnet, dass** die Laserimpuls-Detektionsvorrichtung (D) in das einzige Substrat (S) integriert ist.

4. Vorrichtung nach Anspruch 1, **dadurch gekennzeichnet, dass** die Laserimpuls-Detektionsvorrichtung (D) vom einzigen Substrat (S) und vom Lesekreis (ROIC) unabhängig ist und elektrisch mit dem einzigen Substrat (S) verbunden ist.

5. Vorrichtung nach einem der vorangehenden Ansprüche, **dadurch gekennzeichnet, dass** sie derart konfiguriert ist, dass die Lokalisierung des Laserspots auf der Matrix von Pixeln (INT), die während einer geeigneten Integrationszeit gelesen wird, mit Hilfe einer "Wäge"-Technik erfolgt, die in einer Technik der Berechnung des Baryzentrums des Laserspots besteht.

6. Vorrichtung nach einem der vorangehenden Ansprüche, **dadurch gekennzeichnet, dass** die Laserimpuls-Detektionsvorrichtung (D) die Frequenz des Laserimpulses (L) misst, der dem Laserspot entspricht, wodurch ermöglicht wird, eine Ankunftszeit eines späteren Laserimpulses (L) zu messen, der demselben Laserspot entspricht.

7. Vorrichtung nach den Ansprüchen 5 und 6, **dadurch gekennzeichnet, dass** die der Lektüre der Matrix von Pixeln (INT) zugeordnete Integrationszeit etwa auf der Ankunftszeit des späteren Laserimpulses zentriert ist.

8. Vorrichtung nach einem der vorangehenden Ansprüche, **dadurch gekennzeichnet, dass** sie ferner eine elektronische Vorrichtung zur schnellen Lokalisierung von zusätzlichen Laserspots aufweist.

9. Vorrichtung nach einem der vorangehenden Ansprüche, **dadurch gekennzeichnet, dass** die Matrix von Photodioden (PH) vom Typ CMOS ist.

10. Vorrichtung nach einem der vorangehenden Ansprüche, **dadurch gekennzeichnet, dass** die Kugeln (B) aus Indium bestehen.

11. Vorrichtung nach einem der vorangehenden Ansprüche, **dadurch gekennzeichnet, dass** das einzige Substrat (S) gebildet ist von:
• Silizium oder von
• InGaAs.

12. Vorrichtung nach einem der Ansprüche 1 bis 11, **dadurch gekennzeichnet, dass** das einzige Substrat (S) n-dotiert ist.

13. Vorrichtung nach einem der Ansprüche 1 bis 11, **dadurch gekennzeichnet, dass** das einzige Substrat (S) p-dotiert ist.

## Claims

1. A device for detecting laser spots with a matrix deviometer, comprising:
• a readout circuit (ROIC) having a matrix of pixels (INT);
• a matrix of photodiodes (PH) produced on a single substrate (S), said photodiodes (PH) each comprising an individual electrode;
• a laser pulse detection device (D),
**characterised in that** said matrix of photodiodes (PH) is hybridised on said readout circuit (ROIC) by means of beads (B) made of a flexible and conducting material, such as indium, contacted with the pixels (INT) of said readout circuit (ROIC), so that said single substrate (S) forms a common electrode for all of the photodiodes (PH) and that said individual electrodes are connected to said pixels (INT) by said beads (B), and **in that** said laser pulse detection device (D) is connected to the electrode formed by said single substrate (S), the set of photodiodes (PH) being configured so as to be assimilated into a single, large photodiode.

2. The device according to claim 1, **characterised in that** said laser pulse detection device (D) is integrated into said readout circuit (ROIC).

3. The device according to claim 1, **characterised in that** said laser pulse detection device (D) is integrated into said single substrate (S).

4. The device according to claim 1, **characterised in that** said laser pulse detection device (D) is independent of said single substrate (S) and of said readout circuit (ROIC) and is electrically connected to said substrate (S).

5. The device according to any one of the preceding claims, **characterised in that** it is configured so that the localisation of the laser spot on said matrix of pixels (INT), read during a suitable integration time, is provided by means of a "weighting" technique consisting in a technique for computing the barycentre of the laser spot.

6. The device according to any one of the preceding claims, **characterised in that** said laser pulse detection device (D) measures the frequency of the laser pulse (L), corresponding to the laser spot, allowing the time of arrival to be computed of a subsequent laser pulse (L) corresponding to the same laser spot.

7. The device according to claims 5 and 6, **characterised in that** the integration time associated with reading said matrix of pixels (INT) is substantially centred on said time of arrival of the subsequent laser pulse.

8. The device according to any one of the preceding claims, **characterised in that** it further comprises an electronic device for quickly localising additional laser spots.

9. The device according to any one of the preceding claims, **characterised in that** said matrix of photodiodes (PH) is of the CMOS type.

10. The device according to any one of the preceding claims, **characterised in that** said beads (B) are made up of indium.

11. The device according to any one of the preceding claims, **characterised in that** said single substrate (S) is made up of:
• silicon or
• InGaAs.

12. The device according to any one of claims 1 to 11, **characterised in that** said single substrate (S) is n-doped.

13. The device according to any one of claims 1 to 11, **characterised in that** said single substrate (S) is p-doped.
